# EUROPEAN PATENT APPLICATION

(11) **EP 4 527 897 A1**
(43) Date of publication of application: **26.03.2025**
(21) Application number: 23835204.1
(22) Date of filing: 06.06.2023
(51) Int. Cl.: C08L 101/00, B29B 15/08, C08L 1/08, C08L 23/00

(54) **FIBROUS CELLULOSE COMPOSITE RESIN**

(30) Priority: 07.07.2022 JP 2022109717
(71) Applicant: Daio Paper Corporation, Ehime 799-0492 (JP)
(72) Inventor: IMAI, Takaaki, Shikokuchuo-shi, Ehime 799-0492 (JP)
(74) Representative: Meissner Bolte Partnerschaft mbB
(86) International application number: PCT/JP2023/020994
(87) International publication number: WO 2024/009668

(57) **Abstract**

To provide a fibrous cellulose composite resin having improved strength.

A fibrous cellulose composite resin contains: a fibrous cellulose; and a resin, and as the fibrous cellulose, contains: a carbamated microfiber cellulose having an average fiber length of 0.15 to 0.90 mm and having a part or all of hydroxy groups replaced with carbamate groups; and a carbamated pulp having an average fiber length of 1.0 to 5.0 mm and having a part or all of hydroxy groups replaced with carbamate groups, in which the carbamated microfiber cellulose has a fine ratio of 70% or less.

## Description

### Technical Field

The present invention relates to a fibrous cellulose composite resin.

### Background Art

In recent years, use of fine fibers such as cellulose nanofibers or a microfiber cellulose (microfibrillated cellulose) as a reinforcing material for a resin has attracted attention. However, while the fine fibers are hydrophilic, the resin is hydrophobic. Therefore, when the fine fibers are used as a reinforcing material for the resin, there is a problem in dispersibility of the fine fibers. Therefore, the present inventors have proposed to replace a hydroxyl group of the fine fibers with a carbamate group (see Patent Literature 1). According to this proposal, the dispersibility of the fine fibers is improved, and therefore strength of the composite resin is improved.

However, even at present, it is desired to further improve the strength, and various studies have been continued.

### Citation List

### Patent Literature

Patent Literature 1: JP 2020-163651 A

### Summary of Invention

### Technical Problem

An object of the present invention is to provide a fibrous cellulose composite resin having improved strength.

### Solution to Problem

In the above proposal (Patent Literature 1), it is described that the present inventors have not focused on introduction of a carbamate and have pursued physical properties of fine fibers and other substances to be mixed. In addition, in the above proposal, it is described that a pulp can be blended together with a microfiber cellulose, and that it is most preferable to add no pulp, that is, a content percentage of the pulp is 0% by mass. This is because strength of a composite resin decreases when the pulp is blended. During further repeated tests, it has been found that, conversely, the strength of the composite resin is improved by carbamating the pulp. The following means has been reached from this finding.

That is, a fibrous cellulose composite resin containing:
a fibrous cellulose; and a resin,
wherein the fibrous cellulose, containing a carbamated microfiber cellulose having an average fiber length of 0.15 to 0.90 mm and having a part or all of hydroxy groups replaced with carbamate groups; and a carbamated pulp having an average fiber length of 1.0 to 5.0 mm and having a part or all of hydroxy groups replaced with carbamate groups, in which the carbamated microfiber cellulose has a fine ratio of 70% or less.

### Advantageous Effects of Invention

According to the present invention, a fibrous cellulose composite resin having improved strength is obtained.

### Description of Embodiments

Next, an embodiment for carrying out the invention will be described. Note that the present embodiment is an example of the present invention. The scope of the present invention is not limited to the scope of the present embodiment.

A fibrous cellulose composite resin of the present embodiment contains: a fibrous cellulose; and a resin, and as the fibrous cellulose, contains: a carbamated microfiber cellulose having an average fiber length of 0.15 to 0.90 mm and having a part or all of hydroxy groups replaced with carbamate groups; and a carbamated pulp having an average fiber length of 1.0 to 5.0 mm and having a part or all of hydroxy groups replaced with carbamate groups, in which the carbamated microfiber cellulose has a fine ratio of 70% or less. Details will be described below.

### (Microfiber cellulose)

In the present embodiment, the fibrous cellulose is a microfiber cellulose (microfibrillated cellulose) having an average fiber diameter of 0.1 to 20 µm. When the fibrous cellulose is a microfiber cellulose, a resin reinforcing effect is significantly improved. In addition, the microfiber cellulose is more easily modified with a carbamate group (carbamated) than cellulose nanofibers, which are also fine fibers. However, it is more preferable to carbamate a cellulose raw material before making the cellulose raw material finer, and in this case, the microfiber cellulose is equivalent to the cellulose nanofibers.

The microfiber cellulose can be obtained by defibrating a cellulose raw material (hereinafter, also referred to as a "raw material pulp") (making the cellulose raw material finer). As the raw material pulp, for example, one or more kinds selected from the group consisting of a wood pulp made from hardwood, softwood, or the like, a non-wood pulp made from straw, bagasse, cotton, hemp, bast fibers, or the like, and a de-inked pulp (DIP) made from recovered used paper, waste paper, or the like can be used. Note that the above various raw materials may be, for example, in a state of a ground product (powdered product) called a cellulose-based powder or the like.

However, as the raw material pulp, a wood pulp is preferably used in order to avoid contamination with impurities as much as possible. As the wood pulp, for example, one or more kinds selected from the group consisting of a chemical pulp such as a hardwood kraft pulp (LKP) or a softwood kraft pulp (NKP), and a mechanical pulp (TMP) can be used.

The hardwood kraft pulp may be a hardwood bleached kraft pulp, a hardwood unbleached kraft pulp, or a hardwood semi-bleached kraft pulp. Similarly, the softwood kraft pulp may be a softwood bleached kraft pulp, a softwood unbleached kraft pulp, or a softwood semi-bleached kraft pulp.

As the mechanical pulp, for example, one or more kinds selected from the group consisting of a stone ground pulp (SGP), a pressure stone ground pulp (PGW), a refiner ground pulp (RGP), a chemiground pulp (CGP), a thermoground pulp (TGP), a ground pulp (GP), a thermomechanical pulp (TMP), a chemithermomechanical pulp (CTMP), a refiner mechanical pulp (RMP), and a bleached thermomechanical pulp (BTMP) can be used.

The raw material pulp can be pretreated by a chemical method prior to defibration. Examples of the pretreatment by a chemical method include hydrolysis of a polysaccharide by an acid (acid treatment), hydrolysis of a polysaccharide by an enzyme (enzyme treatment), swelling of a polysaccharide by an alkali (alkali treatment), oxidation of a polysaccharide by an oxidizing agent (oxidation treatment), and reduction of a polysaccharide by a reducing agent (reduction treatment). However, as the pretreatment by a chemical method, the enzyme treatment is preferably performed, and one or more treatments selected from the acid treatment, the alkali treatment, and the oxidation treatment are more preferably performed. Hereinafter, details of the enzyme treatment will be described.

As an enzyme used for the enzyme treatment, at least one of a cellulase enzyme and a hemicellulase enzyme is preferably used, and both of these enzymes are more preferably used together. Use of these enzymes makes defibration of the cellulose raw material easier. Note that the cellulase enzyme causes decomposition of cellulose in the presence of water. The hemicellulase enzyme causes decomposition of hemicellulose in the presence of water.

Examples of the cellulase enzyme include enzymes that are produced by Trichoderma (filamentous fungus), Acremonium (filamentous fungus), Aspergillus (filamentous fungus), Phanerochaete (basidiomycete), Trametes (basidiomycete), Humicola (filamentous fungus), Bacillus (bacterium), Schizophyllum (basidiomycete), Streptomyces (bacterium), and Pseudomonas (bacterium). These cellulase enzymes can be purchased as reagents or commercially available products. Examples of the commercially available products include Celluloisin T2 (manufactured by HPI Inc.), Meicelase (manufactured by Meiji Seika Pharma Co., Ltd.), Novozyme 188 (manufactured by Novozymes), Multifect CX10L (manufactured by Genencor Corp.), and cellulase enzyme GC220 (manufactured by Genencor Corp.).

In addition, as the cellulase enzyme, either endoglucanase (EG) or cellobiohydrolase (CBH) can also be used. EG and CBH may be used singly or as a mixture thereof. In addition, EG and CBH may be mixed with a hemicellulase enzyme to be used.

Examples of the hemicellulase enzyme include xylanase as an enzyme that decomposes xylan, mannase as an enzyme that decomposes mannan, and arabanase as an enzyme that decomposes araban. Pectinase as an enzyme that decomposes pectin can also be used.

Hemicellulose is a polysaccharide excluding pectins present between cellulose microfibrils in a plant cell wall. Hemicellulose is diverse and differs depending on the kind of wood and a cell wall layer. Glucomannan is a main component on a secondary wall of softwood, and 4-O-methylglucuronoxylan is a main component on a secondary wall of hardwood. Therefore, when fine fibers are obtained from a softwood bleached kraft pulp (NBKP), mannase is preferably used. When microfiber cellulose is obtained from a hardwood bleached kraft pulp (LBKP), xylanase is preferably used.

The addition amount of an enzyme to the cellulose raw material depends on, for example, the kind of the enzyme, the kind of wood serving as a raw material (softwood or hardwood), or the kind of mechanical pulp. However, the addition amount of an enzyme to the cellulose raw material is preferably 0.1 to 3% by mass, more preferably 0.3 to 2.5% by mass, and particularly preferably 0.5 to 2% by mass. When the addition amount of an enzyme is less than 0.1% by mass, there is a possibility that an effect of addition of the enzyme cannot be sufficiently obtained. Meanwhile, when the addition amount of an enzyme is more than 3% by mass, cellulose is saccharified, and the yield of the microfiber cellulose may be reduced. In addition, there is also a problem that improvement of the effect corresponding to an increase in the addition amount cannot be recognized.

When a cellulase enzyme is used as the enzyme, the pH during the enzyme treatment is preferably within a weakly acidic region (pH = 3.0 to 6.9) from a viewpoint of reactivity of an enzyme reaction. Meanwhile, when a hemicellulase enzyme is used as the enzyme, the pH during the enzyme treatment is preferably within a weakly alkaline region (pH = 7.1 to 10.0).

The temperature during the enzyme treatment is preferably 30 to 70°C, more preferably 35 to 65°C, and particularly preferably 40 to 60°C, regardless of whether a cellulase enzyme or a hemicellulase enzyme is used as the enzyme. When the temperature during the enzyme treatment is 30°C or higher, enzyme activity hardly decreases, and prolongation of treatment time can be prevented. Meanwhile, when the temperature during the enzyme treatment is 70°C or lower, inactivation of the enzyme can be prevented.

The time of the enzyme treatment depends on, for example, the kind of enzyme, the temperature of the enzyme treatment, or the pH during the enzyme treatment. However, in general, the time of the enzyme treatment is 0.5 to 24 hours.

After the enzyme treatment, the enzyme is preferably inactivated. Examples of a method for inactivating the enzyme include a method for adding an alkaline aqueous solution (preferably having a pH of 10 or more, more preferably a pH of 11 or more) and a method for adding hot water at 80 to 100°C.

Next, a method of the alkali treatment will be described.

By performing the alkali treatment prior to the defibration, a part of hydroxy groups of a hemicellulose or a cellulose included in the pulp is dissociated, and molecules are anionized to weaken intramolecular and intermolecular hydrogen bonding, resulting in promoting dispersion of the cellulose raw material in the defibration.

As an alkali used for the alkali treatment, for example, an organic alkali such as sodium hydroxide, lithium hydroxide, potassium hydroxide, an aqueous ammonia solution, tetramethylammonium hydroxide, tetraethylammonium hydroxide, tetrabutylammonium hydroxide, or benzyltrimethylammonium hydroxide can be used. However, sodium hydroxide is preferably used from a viewpoint of manufacturing cost.

When an enzyme treatment, an acid treatment, or an oxidation treatment is performed prior to the defibration, a water retention degree of the microfiber cellulose can be lowered, the degree of crystallinity can be increased, and homogeneity can be increased. In this regard, when the water retention degree of the microfiber cellulose is low, the microfiber cellulose is easily dehydrated, and a dehydration property of a cellulose fiber slurry is improved.

When the raw material pulp is subjected to an enzyme treatment, an acid treatment, or an oxidation treatment, an amorphous region of a hemicellulose or a cellulose included in the pulp is decomposed. As a result, energy for defibration can be reduced, and uniformity and dispersibility of the cellulose fibers can be improved. However, since the pretreatment decreases an aspect ratio of the microfiber cellulose, it is preferable to avoid excessive pretreatment when the microfiber cellulose is used as a reinforcing material (filler) for a resin.

The defibration of the raw material pulp can be performed by beating the raw material pulp using, for example, a beater, a homogenizer such as a high-pressure homogenizer or a high-pressure homogenizing apparatus, a millstone friction machine such as a grinder or a mill, a single-screw kneader, a multi-screw kneader, a kneader refiner, or a jet mill. However, the defibration is preferably performed using a refiner or a jet mill.

In the present embodiment, the microfiber cellulose means fibers having a larger average fiber width than the cellulose nanofibers. Specifically, the average fiber diameter is, for example, 0.1 to 20 µm, preferably 1 to 19 µm, and more preferably more than 10 to 18 µm. When the average fiber diameter of the microfiber cellulose is less than 0.1 µm, the microfiber cellulose is not different from the cellulose nanofibers, and there is a possibility that an effect of improving strength (particularly flexural modulus) of a resin cannot be sufficiently obtained. In addition, defibration time is long, and a large amount of energy is required. Furthermore, a dehydration property of a cellulose fiber slurry deteriorates. When the dehydration property deteriorates, a large amount of energy is required for drying, and by applying a large amount of energy for drying, the microfiber cellulose may be thermally deteriorated to lower strength thereof. Meanwhile, when the average fiber diameter of the microfiber cellulose is more than (exceeds) 20 µm, the microfiber cellulose is not different from pulp, and there is a possibility that the reinforcing effect is not sufficient.

A method for measuring the average fiber diameter of the microfiber cellulose (fine fibers) is as follows.

First, 100 ml of an aqueous dispersion of fine fibers having a solid concentration of 0.01 to 0.1% by mass is filtered through a Teflon (registered trademark) membrane filter, and solvent substitution is performed once with 100 ml of ethanol and three times with 20 ml of t-butanol. Next, the resulting product is lyophilized and coated with osmium to obtain a sample. This sample is observed with an electron microscope SEM image at any magnification of 3,000 to 30,000 depending on the width of a fiber constituting the sample. Specifically, two diagonals are drawn on the observation image, and three straight lines passing an intersection of the diagonals are arbitrarily drawn. Furthermore, the widths of 100 fibers in total intersecting with the three straight lines are visually measured. Then, the median diameter of the measured values is taken as an average fiber diameter.

The microfiber cellulose has an average fiber length (average length of single fibers) of preferably 0.15 to 0.90 mm, more preferably 0.20 to 0.70 mm, particularly preferably 0.3 to 0.50 mm. When the average fiber length is less than 0.15 mm, a three-dimensional network of fibers cannot be formed, and a composite resin reinforcing effect (particularly flexural modulus) may decrease. Meanwhile, when the average fiber length is more than 0.90 mm, the reinforcing effect may be insufficient because the length is not different from that of the raw material pulp.

The average fiber length of the microfiber cellulose can be arbitrarily adjusted by, for example, selection of a raw material pulp, a pretreatment, or defibration.

The cellulose raw material serving as a raw material of the microfiber cellulose has an average fiber length of preferably 1.0 to 5.0 mm, more preferably 1.2 to 3.0 mm, particularly preferably 1.5 to 2.5 mm. When the average fiber length of the cellulose raw material is less than 1.0 mm, there is a possibility that the resin reinforcing effect cannot be sufficiently obtained when defibration is performed. Meanwhile, when the average fiber length is more than 5.0 mm, it may be disadvantageous in terms of manufacturing cost at the time of defibration.

The fiber length of the microfiber cellulose and a percentage of fibrillation thereof described below are measured by a fiber analyzer "FS5" manufactured by Valmet K.K.

The microfiber cellulose has a fine ratio ( a ratio of fibers each having a fiber length of 0.2 mm or less) of preferably 35 to 70%, more preferably 36 to 55%, particularly preferably 37 to 50%. When the fine ratio is less than 35%, the fiber size is too large, and bendability may be insufficient. Meanwhile, when the fine ratio exceeds 70%, the fiber size is too small and fibers are strongly aggregated during drying, and even if a carbamated pulp is present, the aggregation cannot be disintegrated by kneading shear, and dispersibility may be insufficient.

The microfiber cellulose has an aspect ratio of preferably 2 to 15,000, more preferably 10 to 10,000. When the aspect ratio is less than 2, a three-dimensional network cannot be constructed, and therefore the reinforcing effect may be insufficient even if the average fiber length exceeds 0.15 mm. Meanwhile, when the aspect ratio is more than 15,000, entanglement among fibers of the microfiber cellulose increases, and dispersion in a resin may be insufficient.

The aspect ratio is a value obtained by dividing an average fiber length by an average fiber width. It is considered that a larger aspect ratio makes the number of caught portions to improve the reinforcing effect, but reduces ductility of the resin because of the many caught portions.

The microfiber cellulose has a percentage of fibrillation of preferably 1.0 to 30.0%, more preferably 1.5 to 20.0%, particularly preferably 2.0 to 15.0%. When the percentage of fibrillation is more than 30.0%, a contact area with water is too large, and therefore dehydration may be difficult even if the defibration is performed within a range in which the average fiber width is 0.1 µm or more. Meanwhile, when the percentage of fibrillation is less than 1.0%, there are few hydrogen bonds between fibrils, and there is a possibility that a strong three-dimensional network cannot be formed.

The microfiber cellulose has a degree of crystallinity of preferably 50% or more, more preferably 55% or more, particularly preferably 60% or more. When the degree of crystallinity is less than 50%, mixability with a pulp is improved, but the strength of the fibers themselves is lowered. Therefore, there is a possibility that the strength of the composite resin cannot be improved. Meanwhile, the degree of crystallinity of the microfiber cellulose is preferably 95% or less, more preferably 90% or less, and particularly preferably 85% or less. When the degree of crystallinity is more than 95%, a ratio of strong hydrogen bonds in a molecule increases, the fibers themselves are rigid, and dispersibility is poor.

The degree of crystallinity of the microfiber cellulose can be arbitrarily adjusted by, for example, selection of a raw material pulp, a pretreatment, or a micronization treatment.

The degree of crystallinity is a value measured conforming to JIS K 0131 (1996).

The microfiber cellulose has a pulp viscosity of preferably 2 cps or more, more preferably 4 cps or more. When the pulp viscosity of the microfiber cellulose is less than 2 cps, it may be difficult to suppress aggregation of the microfiber cellulose.

The pulp viscosity is a value measured conforming to TAPPI T 230.

The microfiber cellulose has a freeness of preferably 500 ml or less, more preferably 300 ml or less, particularly preferably 100 ml or less. When the freeness of the microfiber cellulose is more than 500 ml, there is a possibility that a resin strength improving effect cannot be sufficiently obtained.

The freeness of the microfiber cellulose is a value measured conforming to JIS P8121-2 (2012).

The microfiber cellulose has a zeta potential of preferably -150 to 20 mV, more preferably -100 to 0 mV, particularly preferably -80 to -10 mV. When the zeta potential is less than -150 mV, compatibility with a resin significantly decreases, and the reinforcing effect may be insufficient. Meanwhile, when the zeta potential is more than 20 mV, dispersion stability may decrease.

The microfiber cellulose has a water retention degree of preferably 80 to 400%, more preferably 90 to 350%, particularly preferably 100 to 300%. When the water retention degree is less than 80%, the reinforcing effect may be insufficient because the water retention degree is not different from that of the raw material pulp. Meanwhile, when the water retention degree is more than 400%, a dehydration property tends to be poor, and aggregation easily occurs. In this regard, the water retention degree of the microfiber cellulose can be further lowered because hydroxy groups of the fibers are replaced with carbamate groups, and the dehydration property and the drying property can be enhanced.

The water retention degree of the microfiber cellulose can be arbitrarily adjusted by, for example, selection of a raw material pulp, a pretreatment, or defibration.

The water retention degree is a value measured conforming to JAPAN TAPPI No. 26 (2000).

The microfiber cellulose of the present embodiment has a carbamate group. It is not particularly limited how the microfiber cellulose obtains a carbamate group. For example, the microfiber cellulose may obtain a carbamate group by carbamating the cellulose raw material, or may obtain a carbamate group by carbamating a microfiber cellulose (cellulose raw material that has been made finer).

Note that the term "having a carbamate group" means a state in which a carbamate (ester of carbamic acid) is introduced into a fibrous cellulose. The carbamate group is a group represented by -O-CO-NH-, and is, for example, a group represented by -O-CO-NH₂, -O-CONHR, or -O-CO-NR₂. That is, the carbamate group can be represented by the following structural formula (1).

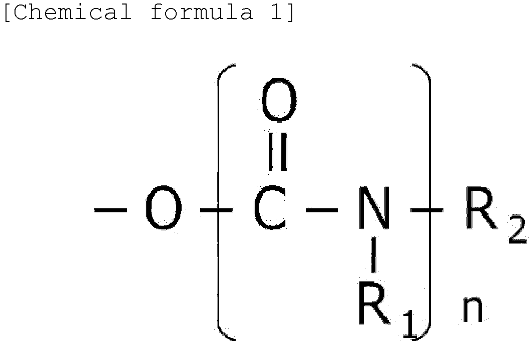

Here, n represents an integer of 1 or more. Rs each independently represent at least any one of a saturated straight chain hydrocarbon group, a saturated branched hydrocarbon group, a saturated cyclic hydrocarbon group, an unsaturated straight chain hydrocarbon group, an unsaturated branched hydrocarbon group, an aromatic group, and a derivative group thereof.

Examples of the saturated straight chain hydrocarbon group include a straight chain alkyl group having 1 to 10 carbon atoms, such as a methyl group, an ethyl group, or a propyl group.

Examples of the saturated branched hydrocarbon group include a branched alkyl group having 3 to 10 carbon atoms, such as an isopropyl group, a sec-butyl group, an isobutyl group, or a tert-butyl group.

Examples of the saturated cyclic hydrocarbon group include a cycloalkyl group such as a cyclopentyl group, a cyclohexyl group, or a norbornyl group.

Examples of the unsaturated straight chain hydrocarbon group include a straight chain alkenyl group having 2 to 10 carbon atoms, such as an ethenyl group, a propen-1-yl group, or a propen-3-yl group, and a straight chain alkynyl group having 2 to 10 carbon atoms, such as an ethynyl group, a propyn-1-yl group, or a propyn-3-yl group.

Examples of the unsaturated branched hydrocarbon group include a branched alkenyl group having 3 to 10 carbon atoms, such as a propen-2-yl group, a buten-2-yl group, or a buten-3-yl group, and a branched alkynyl group having 4 to 10 carbon atoms, such as a butyn-3-yl group.

Examples of the aromatic group include a phenyl group, a tolyl group, a xylyl group, and a naphthyl group.

Examples of the derivative group include a group in which one or more hydrogen atoms of the saturated straight chain hydrocarbon group, the saturated branched hydrocarbon group, the saturated cyclic hydrocarbon group, the unsaturated straight chain hydrocarbon group, the unsaturated branched hydrocarbon group, and the aromatic group are replaced with substituents (for example, a hydroxy group, a carboxy group, a halogen atom, and the like).

In a microfiber cellulose having a carbamate group (into which a carbamate group has been introduced), a part or all of hydroxy groups having high polarity are replaced with carbamate groups having relatively low polarity. Therefore, the microfiber cellulose having a carbamate group has low hydrophilicity and high affinity with a resin or the like having low polarity. As a result, the microfiber cellulose having a carbamate group is excellent in uniform dispersibility with a resin. A slurry of the microfiber cellulose having a carbamate group has low viscosity and a good handling property.

A replacement ratio with a carbamate group to a hydroxy group of the microfiber cellulose is preferably 0.5 to 2 mmol/g, more preferably 0.6 to 1.8 mmol/g, and particularly preferably 0.7 to 1.6 mmol/g. When the replacement ratio is less than 0.5 mmol/g, fibers of the microfiber cellulose are irreversibly aggregated due to a hydroxy group-derived hydrogen bond during drying, and even if the microfiber cellulose is used in combination with a pulp, the microfiber cellulose is not dispersed when being melt-kneaded, and there is a possibility that desired dispersibility is not obtained. When the replacement ratio is 0.5 mmol/g or more, an effect of introducing a carbamate, particularly an effect of improving bending strength of a resin is reliably exhibited. Meanwhile, when the replacement ratio exceeds 2 mmol/g, the cellulose fibers cannot maintain the shapes of the fibers, and there is a possibility that the resin reinforcing effect cannot be sufficiently obtained even if the microfiber cellulose is used in combination with a pulp.

The replacement ratio with a carbamate group (mmol/g) refers to the amount of carbamate groups contained in 1 g of the cellulose raw material having a carbamate group. The cellulose is a polymer having anhydroglucose as a structural unit, and has three hydroxy groups per structural unit.

### <Carbamation>

Here, a method for carbamating a fibrous cellulose will be described in detail.

For introducing a carbamate group (carbamation) into a microfiber cellulose (a cellulose raw material in a case where carbamation is performed before defibration, hereinafter, the same applies, and the microfiber cellulose is also referred to as "microfiber cellulose or the like"), as described above, there are a method for carbamating a cellulose raw material and then making the carbamated cellulose raw material finer and a method for making a cellulose raw material finer and then carbamating the finer cellulose raw material. In this regard, in the present specification, defibration of the cellulose raw material is described first, and then carbamation (modification) is described. However, either defibration or carbamation can be performed first. However, preferably, carbamation is performed first, and then defibration is performed. This is because the cellulose raw material before dehydration has high dehydration efficiency, and the cellulose raw material is easily defibrated by being heated for carbamation.

The step of carbamating microfiber cellulose or the like can be mainly divided into, for example, a mixing treatment, a removal treatment, and a heat treatment. Note that the mixing treatment and the removal treatment can also be collectively referred to as a preparation treatment for preparing a mixture to be subjected to the heat treatment.

In the mixing treatment, a microfiber cellulose or the like (which may be a cellulose raw material as described above, hereinafter, the same applies) and urea and/or a derivative of urea (hereinafter, also simply referred to as "urea or the like") are mixed in a dispersion medium.

Examples of urea and a derivative of urea include urea, thiourea, biuret, phenylurea, benzylurea, dimethylurea, diethylurea, tetramethylurea, and a compound in which a hydrogen atom of urea is replaced with an alkyl group. These examples of urea and a derivative of urea can be used singly or in combination of two or more kinds thereof. However, urea is preferably used.

A lower limit of a mixing mass ratio of urea or the like to microfiber cellulose or the like (urea or the like/microfiber cellulose or the like) is preferably 10/100 and more preferably 20/100. Meanwhile, an upper limit thereof is preferably 300/100 and more preferably 200/100. By setting the mixing mass ratio to 10/100 or more, an efficiency of carbamation is improved. Meanwhile, even if the mixing mass ratio is more than 300/100, carbamation reaches a plateau.

The dispersion medium is usually water. However, another dispersion medium such as an alcohol or an ether, or a mixture of water and another dispersion medium may be used.

In the mixing treatment, for example, microfiber cellulose or the like and urea or the like may be added to water, microfiber cellulose or the like may be added to an aqueous solution of urea or the like, or urea or the like may be added to a slurry containing microfiber cellulose or the like. In addition, for uniform mixing, stirring may be performed after addition. Furthermore, the dispersion containing microfiber cellulose or the like and urea or the like may contain another component.

In the removal treatment, the dispersion medium is removed from the dispersion containing microfiber cellulose or the like and urea or the like, obtained in the mixing treatment. By removing the dispersion medium, urea or the like can be efficiently reacted in the subsequent heat treatment.

The dispersion medium is preferably removed by volatilizing the dispersion medium by heating. According to this method, only the dispersion medium can be efficiently removed while the component of urea or the like is left.

A lower limit of a heating temperature in the removal treatment is preferably 50°C, more preferably 70°C, and particularly preferably 90°C when the dispersion medium is water. By setting the heating temperature to 50°C or higher, the dispersion medium can be efficiently volatilized (removed). Meanwhile, an upper limit of the heating temperature is preferably 120°C and more preferably 100°C. When the heating temperature is higher than 120°C, the dispersion medium and urea may react with each other, and urea may be decomposed alone.

Heating time in the removal treatment can be appropriately adjusted according to a solid concentration of the dispersion and the like. Specifically, the heating time is, for example, 6 to 24 hours.

In the heat treatment subsequent to the removal treatment, a mixture of microfiber cellulose or the like and urea or the like is subjected to the heat treatment. In this heat treatment, a part or all of hydroxy groups of microfiber cellulose or the like react with urea or the like to be replaced with carbamate groups. More specifically, when urea or the like is heated, urea or the like is decomposed into isocyanic acid and ammonia as indicated in the following reaction formula (1). Isocyanic acid is very reactive, and forms a carbamate group on a hydroxy group of cellulose, for example, as indicated in the following reaction formula (2).

NH₂-CO-NH₂ → H-N=C=O + NH₃ ... (1)

Cell-OH + H-N=C=O → Cell-O-CO-NH₂ ... (2)

A lower limit of a heating temperature in the heat treatment is preferably 120°C, more preferably 130°C, particularly preferably a melting point (about 134°C) of urea, still more preferably 140°C, and most preferably 150°C. By setting the heating temperature to 120°C or higher, carbamation is efficiently performed. An upper limit of the heating temperature is preferably 200°C, more preferably 180°C, and particularly preferably 170°C. When the heating temperature is more than 200°C, microfiber cellulose or the like is decomposed, and the reinforcing effect may be insufficient.

A lower limit of heating time in the heat treatment is preferably one minute, more preferably five minutes, particularly preferably 30 minutes, still more preferably one hour, and most preferably two hours. By setting the heating time to one minute or more, the carbamation can be reliably performed. Meanwhile, an upper limit of the heating time is preferably 15 hours and more preferably 10 hours. When the heating time is more than 15 hours, it is not economical, and the carbamation can be sufficiently performed in 15 hours.

However, prolonged heating time leads to deterioration of cellulose fibers. Therefore, a pH condition in the heat treatment is important. As the pH, an alkaline condition with a pH of 9 or more is preferable, an alkaline condition with a pH of 9 to 13 is more preferable, and an alkaline condition with a pH of 10 to 12 is particularly preferable. In addition, as a secondary measure, an acidic or neutral condition with a pH of 7 or less is adopted, an acidic or neutral condition with a pH of 3 to 7 is preferably adopted, and an acidic or neutral condition with a pH of 4 to 7 is particularly preferably adopted. Under a neutral condition with a pH of 7 to 8, the average fiber length of the cellulose fibers is shortened, and the resin reinforcing effect may be poor. On the other hand, under an alkaline condition with a pH of 9 or more, the reactivity of the cellulose fibers is enhanced, the reaction with urea or the like is promoted, and the carbamation is efficiently performed. Therefore, the average fiber length of the cellulose fibers can be sufficiently ensured. Meanwhile, under an acidic condition with a pH of 7 or less, the reaction of decomposing urea or the like into isocyanic acid and ammonia proceeds, the reaction to cellulose fibers is promoted, and the carbamation is efficiently performed. Therefore, the average fiber length of the cellulose fibers can be sufficiently ensured. However, if possible, it is preferable to perform the heat treatment under an alkaline condition. This is because acid hydrolysis of cellulose may proceed under an acidic condition.

The pH can be adjusted, for example, by adding an acidic compound (for example, acetic acid or citric acid) or an alkaline compound (for example, sodium hydroxide or calcium hydroxide) to a mixture.

Examples of an apparatus for heating in the heat treatment include a hot air dryer, a paper machine, and a dry pulp machine.

A mixture after the heat treatment may be dehydrated and washed. The dehydration and washing only need to be performed with water or the like. By the dehydration and washing, unreacted and remaining urea or the like can be removed.

The microfiber cellulose is dispersed in an aqueous medium to be a dispersion (slurry), if necessary. The entire amount of the aqueous medium is particularly preferably water, but an aqueous medium partially containing another liquid having compatibility with water can also be used. Examples of the other liquid include lower alcohols each having 3 or less carbon atoms.

The slurry has a solid concentration of preferably 0.1 to 10.0% by mass, more preferably 0.5 to 5.0% by mass. When the solid concentration is less than 0.1% by mass, excessive energy may be required at the time of dehydration or drying. Meanwhile, when the solid concentration is more than 10.0% by mass, fluidity of the slurry itself decreases, and there is a possibility that the slurry cannot be uniformly mixed.

### (Pulp)

Next, the carbamated pulp will be described.

The fibrous cellulose composite resin of the present embodiment contains a carbamated pulp. The pulp also has a role of significantly improving the dehydration property of a fibrous cellulose slurry.

The carbamated pulp can be obtained by carbamating a raw material pulp. As the raw material pulp, the same as the raw material pulp of the carbamated microfiber cellulose can be used, and it is preferable to use the same pulp. The use of the same pulp improves affinity of the cellulose fibers, resulting in improved homogeneity of a cellulose fiber slurry.

In addition, a method for carbamating the pulp can be similar to that in the case of the microfiber cellulose. However, a replacement ratio (replacement ratio with a carbamate group to a hydroxy group of the pulp) is preferably 0.5 to 2 mmol/g, more preferably 0.6 to 1.8 mmol/g, and particularly preferably 0.7 to 1.6 mmol/g. When the replacement ratio is less than 0.5 mmol/g, fibers of the pulp are irreversibly aggregated due to a hydroxy group-derived hydrogen bond during drying, the pulp is not dispersed when being melt-kneaded, and there is a possibility that desired dispersibility is not obtained. Meanwhile, when the replacement ratio exceeds 2 mmol/g, a reinforcing property of the pulp itself as a fiber is lost, and therefore there is a possibility that desired mechanical properties are not obtained.

The carbamated pulp has an average fiber diameter of preferably more than 10 to 50 µm, more preferably 12 to 45 µm, particularly preferably 14 to 40 µm. When the average fiber diameter is 10 µm or less, an area where the microfiber cellulose is adsorbed is reduced. Therefore, aggregation of the microfiber cellulose alone progresses, and there is a possibility that the aggregation cannot be disintegrated by shear during kneading. Meanwhile, when the average fiber diameter is more than (exceeds) 50 µm, since the size of the fibers themselves is large, the fibers themselves may act as a defect in the composite resin, and there is a possibility that desired mechanical properties are not obtained.

The average fiber diameter of the carbamated pulp is a value measured conforming to JIS P 8226.

The carbamated pulp has an average fiber length (average length of single fibers) of preferably 1.0 to 5.0 mm, more preferably 1.2 to 4.5 mm, particularly preferably 1.4 to 4.0 mm. When the average fiber length is less than 1.0 mm, aggregation of the pulp itself progresses during drying, and there is a possibility that the aggregation cannot be disintegrated by shear during kneading. Meanwhile, when the average fiber length is more than 5.0 mm, since the size of the fibers themselves is large, the fibers themselves may act as a defect in the composite resin, and there is a possibility that desired mechanical properties are not obtained.

The average fiber length of the carbamated pulp can be arbitrarily adjusted by, for example, selection of a raw material pulp.

The fiber length of the carbamated pulp is measured by a fiber analyzer "FS5" manufactured by Valmet K.K.

The carbamated pulp has a fine ratio (ratio of fibers each having a fiber length of 0.2 mm or less) of preferably 1 to 20%, more preferably 2 to 17%, particularly preferably 3 to 15%. When the fine ratio is more than 15%, aggregation of the pulp itself progresses during drying, and there is a possibility that the aggregation cannot be disintegrated by shear during kneading. Meanwhile, when the fine ratio is less than 1%, a pulp surface is too smooth, and when the microfiber cellulose adheres to the pulp surface, the microfiber cellulose is separated without being caught, and as a result, aggregation of the microfiber cellulose alone progresses, and there is a possibility that the aggregation cannot be disintegrated by shear during kneading.

The carbamated pulp has an aspect ratio of preferably 10 to 500, more preferably 15 to 400, particularly preferably 20 to 300. When the aspect ratio is less than 10, the pulp fibers cannot exhibit an effect as fiber reinforcement and are merely present in the composite resin, and even if the microfiber cellulose is present, the pulp may act as a defect in the composite resin, and there is a possibility that the mechanical properties are not improved. Meanwhile, when the aspect ratio is more than 500, fibers are entangled and aggregated and cannot exhibit an effect as fiber reinforcement, and even if the microfiber cellulose is present, the pulp may act as a defect in the composite resin, and there is a possibility that the mechanical properties are not improved.

The aspect ratio is a value obtained by dividing an average fiber length by an average fiber width.

The carbamated pulp has a degree of crystallinity of preferably 50% or more, more preferably 55% or more, particularly preferably 60% or more. When the degree of crystallinity is less than 50%, strength of the pulp fibers as fibers is insufficient. Therefore, even if the microfiber cellulose is present, the pulp may act as a defect in the composite resin, and there is a possibility that the mechanical properties are not improved. Meanwhile, the degree of crystallinity of the microfiber cellulose is preferably 95% or less, more preferably 90% or less, and particularly preferably 85% or less. When the degree of crystallinity is more than 95%, the pulp fibers are too rigid and flexural modulus is improved, but flexibility as a composite resin is impaired. Therefore, even if the microfiber cellulose is present, bending strength and elongation may be reduced.

The degree of crystallinity of the microfiber cellulose can be arbitrarily adjusted by, for example, selection of a raw material pulp.

The degree of crystallinity is a value measured conforming to JIS K 0131 (1996).

The carbamated pulp has a viscosity of preferably 2 cps or more, more preferably 4 cps or more. When the viscosity is less than 2 cps, strength of fibers themselves is insufficient because of a too low polymerization degree, and even if the microfiber cellulose is present, the pulp may act as a defect in the composite resin, and there is a possibility that the mechanical properties are not improved.

The pulp viscosity is a value measured conforming to TAPPI T 230.

### (Relationship between microfiber cellulose and pulp)

First, a relationship between the carbamated microfiber cellulose and the carbamated pulp will be described.

As to the fact that the microfiber cellulose is aggregated during drying, and this aggregation cannot be disintegrated by external shear, the present inventors have considered that, if there is a scaffold in which the microfiber cellulose is aggregated in the system, the microfiber cellulose is dried during drying while the microfiber cellulose adheres to the scaffold, and when the microfiber cellulose receives shear from the outside during kneading, the shear is efficiently transferred to the microfiber cellulose through the scaffold, and the microfiber cellulose can be dispersed. As a result of intensive studies based on this assumption, the present inventors have reached use of a carbamated pulp as a scaffold. That is, the present inventors have found that by forming a composite resin using a mixed slurry of the carbamated microfiber cellulose and the carbamated pulp, fiber dispersibility in a resin is improved, and a fibrous cellulose composite resin having favorable bendability can be obtained.

On such a background, a ratio of a carbamate group introduction amount (replacement ratio) between the carbamated microfiber cellulose and the carbamated pulp (replacement ratio of carbamated pulp/replacement ratio of microfiber cellulose) is preferably 0.3 to 4.0, more preferably 0.4 to 3.0, and particularly preferably 0.5 to 2.0. When the ratio of the introduction amount is less than 0.3 or exceeds 4.0, the carbamated microfiber cellulose and the carbamated pulp are easily peeled off even if the carbamated microfiber cellulose and the carbamated pulp once adhere to each other due to a large difference in surface properties between the carbamated microfiber cellulose and the carbamated pulp, fibers of the carbamated microfiber cellulose are aggregated, and there is a possibility that the aggregated fibers are not redispersed during kneading.

An absolute value of a difference between the carbamate group introduction amount (replacement ratio) of the carbamated microfiber cellulose and the carbamate group introduction amount (replacement ratio) of the carbamated pulp is preferably 0.01 to 2.00 mmol/g, more preferably 0.01 to 1.00 mmol/g, and particularly preferably 0.01 to 0.50 mmol/g. When the absolute value is out of the above range, there is a possibility that the carbamated microfiber cellulose and the carbamated pulp do not interact with each other during drying, and fibers of the microfiber cellulose may be aggregated.

A ratio of an average fiber diameter between the carbamated microfiber cellulose and the carbamated pulp (average fiber width of carbamated pulp/average fiber width of microfiber cellulose) is preferably 1.1 to 50.0, more preferably 1.1 to 30.0, and particularly preferably 1.1 to 10.0. When the ratio of the average fiber diameter is 1 or less, the carbamated pulp does not function as a scaffold, and fibers of the carbamated microfiber cellulose are aggregated, whereby there is a possibility that the aggregated fibers are not redispersed during kneading. Meanwhile, when the ratio of the average fiber diameter exceeds 50.0, the microfiber cellulose is easily peeled off due to irregularities on the surface of the carbamated pulp even if the microfiber cellulose once adheres to the carbamated pulp. As a result, fibers of the carbamated microfiber cellulose are aggregated, whereby there is a possibility that the aggregated fibers are not redispersed during kneading.

A ratio of the average fiber length between the carbamated microfiber cellulose and the carbamated pulp (average fiber length of carbamated pulp/average fiber length of microfiber cellulose) is preferably 1.1 to 20.0, more preferably 1.5 to 15.0, and particularly preferably 2.0 to 10.0. When the ratio of the average fiber length is less than 1.1, the carbamated microfiber cellulose is firmly adsorbed to the carbamated pulp, whereby the microfiber cellulose is not redispersed during kneading, and there is a possibility that physical properties are not improved. Meanwhile, when the ratio of the average fiber length exceeds 20.0, the microfiber cellulose is easily peeled off due to irregularities on the surface of the carbamated pulp even if the microfiber cellulose once adheres to the carbamated pulp. As a result, fibers of the carbamated microfiber cellulose are aggregated, whereby there is a possibility that the aggregated fibers are not redispersed during kneading.

A ratio of a dry mass between the carbamated microfiber cellulose and the carbamated pulp (dry mass of carbamated pulp/dry mass of microfiber cellulose) is preferably 0.01 to 100, more preferably 0.10 to 10, particularly preferably 0.30 to 3, and most preferably 0.30 to 1. When a blending ratio of the carbamated microfiber cellulose is relatively small, cellulose fibers contributing to resin reinforcement are insufficient, and there is a possibility that the reinforcing property is insufficient. Meanwhile, when the blending ratio of the carbamated microfiber cellulose is relatively large, fibers having a large size as a scaffold, that is, the pulp is insufficient. Therefore, fibers of the microfiber cellulose are aggregated during drying, and there is a possibility that the microfiber cellulose cannot be disintegrated by kneading shear.

The pulp kinds of the carbamated microfiber cellulose and the carbamated pulp are preferably the same (hardwood bleached kraft pulp, softwood bleached kraft pulp, or the like). It is considered that when the pulp kinds are the same, the hemicellulose kinds are the same, therefore the microfiber cellulose and the pulp interact with each other during drying to easily adhere to each other, and aggregation of fibers of the microfiber cellulose can be prevented.

### (Maleic anhydride-modified resin)

The fibrous cellulose composite resin of the present embodiment more preferably contains a maleic anhydride-modified resin, particularly maleic anhydride-modified polypropylene (MAPP). In this regard, MAPP is a polymer that obtains a hydrophilic side chain derived from maleic anhydride (side chain of a succinic anhydride structure in which double bond of maleic anhydride is eliminated) in a hydrophobic PP main chain by a reaction of maleic anhydride with PP. The hydrophilic side chain of MAPP interacts with (is hydrogen-bonded to) a carbamate group or a hydroxy group of the carbamated cellulose fiber. Moreover, since the carbamate group is more hydrophilic than the hydroxy group, the carbamate group more easily interacts with the hydrophilic side chain of MAPP. In addition, MAPP has both hydrophilic and hydrophobic properties in a molecule thereof, and therefore is hardly aligned and hardly crystallized. Furthermore, the carbamate group also contributes to suppression of aggregation of fibers. From the above, MAPP and the carbamated cellulose fibers that interact with MAPP have very excellent dispersibility in the resin.

A mixing amount of the maleic anhydride-modified resin is preferably 1 to 200 parts by mass, more preferably 10 to 100 parts by mass, and particularly preferably 40 to 60 parts by mass with respect to 100 parts by mass of the microfiber cellulose. When the mixing amount of the maleic anhydride-modified resin is less than 1 part by mass, strength is not sufficiently improved. Meanwhile, when the mixing amount is more than 200 parts by mass, the maleic anhydride-modified resin is excessively added, and the strength tends to be lowered.

The maleic anhydride-modified resin has a weight average molecular weight of, for example, 1,000 to 100,000, preferably 3,000 to 90,000, particularly preferably 5,000 to 80000. When the weight average molecular weight is less than 1000, the maleic anhydride-modified resin adheres to the microfiber cellulose or the pulp, but is incompatible with a resin matrix, and homogeneity may be poor. In addition, since strength of the maleic anhydride-modified polypropylene itself is too low, there is a possibility that the physical properties as a whole may be insufficient although fibers are reinforced. Meanwhile, when the weight average molecular weight exceeds 100,000, a viscosity increases during melting, a portion where the maleic anhydride-modified resin does not sufficiently adhere to the microfiber cellulose or the pulp is generated, and fibers are not involved in reinforcing the entire resin. There is a possibility that physical properties as a composite resin are insufficient.

The maleic anhydride-modified resin has an acid value of preferably 10 to 90 mgKOH/g, more preferably 20 to 80 mgKOH/g, particularly preferably 30 to 70 mgKOH/g. When the acid value is less than 10 mgKOH/g, adhesiveness with the microfiber cellulose or the pulp is insufficient, and there is a possibility that dispersibility is deteriorated. Meanwhile, when the acid value exceeds 90 mgKOH/g, the adhesiveness with the microfiber cellulose or the pulp is sufficient, but compatibility with the resin matriz is deteriorated, and conversely, dispersibility in the composite resin may be deteriorated.

### (Polyethylene)

The fibrous cellulose composite resin of the present embodiment more preferably contains a polyethylene, particularly a polyethylene having a molecular weight of one million g/mol or more.

The molecular weight of the polyethylene is more preferably one million to ten million g/mol, and particularly preferably two million to eight million g/mol. When the molecular weight is one million g/mol or more, resins can interact with each other while interacting with fibers during melting, and the composite resin easily moves integrally in a kneader. Note that PE having a molecular weight of one million g/mol or more is referred to as ultra-high molecular weight polyethylene (UHMW-PE). Meanwhile, when the molecular weight exceeds ten million g/mol, the polyethylene has a too low viscosity during melting, and therefore is hardly compatible with the resin matrix to form a non-uniform portion, whereby there is a possibility that a strand cannot be stably formed.

The polyethylene has a melting point of preferably 125°C or higher, more preferably 130 to 160°C, particularly preferably 135 to 155°C. When the melting point is lower than 125°C, the polyethylene is immediately melted at an inlet of a kneader or the like and adheres to a wall surface, and there is a possibility that the polyethylene is not uniformly dispersed in a kneaded product. Meanwhile, when the melting point exceeds 160°C, it is necessary to increase a kneading temperature more than necessary, and there is a possibility that the microfiber cellulose is colored due to thermal decomposition or the like.

The polyethylene can be, for example, in a powder form, a pellet form, a sheet form, or a block form. However, the polyethylene is preferably in a powder form. When the polyethylene is in a powder form, by adding the polyethylene to an aqueous dispersion of the microfiber cellulose or the pulp, mixing the polyethylene therewith, and drying the mixthre, a part of the polyethylene powder enters a gap between aggregated fibers of the microfiber cellulose, whereby the polyethylene powder can suppress the aggregation to such an extent that the fibers of the microfiber cellulose can be redispersed by shear with a kneader as compared with a case where nothing is added.

When the polyethylene is in a powder form, the polyethylene has an average particle size of preferably 10 to 1000 µm, more preferably 15 to 100 µm, particularly preferably 20 to 80 µm. When the average particle size is less than 10 µm, particles of the polyethylene powder are aggregated and floated in an aqueous dispersion of the microfiber cellulose or the pulp, and the particles of the polyethylene powder cannot enter a gap between fibers of the microfiber cellulose or between fibers of the pulp. As a result, there is a possibility that the effect of suppressing the aggregation cannot be sufficiently exhibited. Meanwhile, when the average particle size of the polypropylene powder is 100 µm or less, the polyethylene powder easily enters a space between cellulose fibers during mixing with a slurry (MFC aqueous dispersion), and the polyethylene uniformly spreads over the whole during drying.

The average particle size is a value measured conforming to ISO13320.

The maleic anhydride-modified polypropylene and the polyethylene are preferably contained at preferably 10 : 90 to 90 : 10, more preferably 15 : 85 to 85 : 15, particularly preferably 50 : 50 to 80 : 20 in terms of a dry mass ratio. When a content ratio of the maleic anhydride-modified polypropylene is small, the polyethylene enters a space between the microfiber cellulose or pulp and the maleic anhydride-modified polypropylene adhering to each other, and the adhesion between the maleic anhydride-modified polypropylene and the microfiber cellulose or the pulp may be inhibited. Meanwhile, when the content ratio of the maleic anhydride-modified polypropylene is large, adhesiveness between the maleic anhydride-modified polypropylene and the microfiber cellulose or the pulp is favorable, but strength of a strand itself is insufficient during strand processing at the time of kneading and discharging, and there is a possibility that the strand cannot be formed.

### (Inorganic powder that does not interact)

The fibrous cellulose composite resin of the present embodiment more preferably contains an inorganic powder that does not interact with a fibrous cellulose. By containing the inorganic powder that does not interact, it is intended to physically inhibit hydrogen bonding between cellulose fibers.

Here, the phrase that the inorganic powder does not interact means that the inorganic powder is not strongly bonded to a cellulose by a covalent bond, an ionic bond, or a metal bond (That is, bonding by a hydrogen bond or van der Waals force is included in the concept that the inorganic powder does not interact.). Preferably, the strong bond is a bond having bond energy exceeding 100 kJ/mol.

The inorganic powder that does not interact is preferably an inorganic powder that has little action of dissociating hydroxy groups of cellulose fibers into hydroxide ions when coexisting in a slurry. In this regard, the inorganic powder is advantageous in terms of operation. Specifically, examples of a method for drying the composite resin include: a method for drying the composite resin by directly applying an aqueous dispersion to a metal drum as a heat source (for example, drying with a Yankee dryer or a cylinder dryer); and a method for heating the composite resin without bringing an aqueous dispersion into direct contact with a heat source, that is, a method for drying the composite resin in air (for example, drying with a constant temperature dryer). When a resin powder is brought into contact with a heated metal plate (for example, a Yankee dryer or a cylinder dryer) and dried, a film is formed on a surface of the metal plate, thermal conduction is deteriorated, and drying efficiency is significantly reduced. The inorganic powder is advantageous in that such a problem hardly occurs.

The inorganic powder that does not interact has an average particle size of preferably 1 to 10,000 µm, more preferably 10 to 5000 µm, particularly preferably 100 to 1000 µm. When the average particle size exceeds 10,000 µm, there is a possibility that the effect of inhibiting aggregation by enter of the inorganic powder into a gap between cellulose fibers when an aqueous medium is removed cannot be exhibited. Meanwhile, when the average particle size is less than 1 µm, there is a possibility that hydrogen bonding between molecules of the microfiber cellulose cannot be inhibited due to the fine particles.

In the present specification, the average particle size of the inorganic powder that does not interact is a median diameter calculated from a volume-based particle size distribution measured using a particle size distribution measuring apparatus (for example, a laser diffraction/scattering type particle size distribution measuring apparatus manufactured by HORIBA, Ltd.) with the powder as it is or in a state of an aqueous dispersion.

Examples of the inorganic powder include a simple substance of a metal element belonging to Group I to Group VIII of the Periodic Table, such as Fe, Na, K, Cu, Mg, Ca, Zn, Ba, Al, Ti, or a silicon element, an oxide thereof, a hydroxide thereof, a carbonate thereof, a sulfate thereof, a silicate thereof, a sulfite thereof, and various clay minerals formed of these compounds. Specific examples thereof include barium sulfate, calcium sulfate, magnesium sulfate, sodium sulfate, calcium sulfite, zinc oxide, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay wollastonite, glass beads, glass powder, silica gel, dry silica, colloidal silica, silica sand, silica stone, quartz powder, diatomaceous earth, white carbon, and glass fiber. A plurality of these inorganic fillers may be contained. In addition, the inorganic powder may be one contained in a waste paper pulp, or may be a so-called recycled filler obtained by regenerating inorganic substances in a papermaking sludge.

However, it is preferable to use at least one or more kinds of inorganic powders selected from calcium carbonate, talc, white carbon, clay, fired clay, titanium dioxide, aluminum hydroxide, a regenerated filler, and the like preferably used as a filler or a pigment for papermaking, it is more preferable to use at least one or more kinds selected from calcium carbonate, talc, and clay, and it is particularly preferable to use at least one of light calcium carbonate and heavy calcium carbonate. When calcium carbonate, talc, or clay is used, it is easy to form a composite with a matrix such as a resin. In addition, since calcium carbonate, talc, or clay is a general-purpose inorganic material, there is an advantage that application limitation is less likely to occur. Furthermore, calcium carbonate is particularly preferable for the following reason. When light calcium carbonate is used, it is easy to control the size and shape of the powder to be constant. Therefore, there is an advantage that by adjusting the size and shape of the powder according to the size and shape of the cellulose fiber such that the effect of suppressing aggregation of the cellulose fibers by enter of the powder into a gap is easily exhibited, the effect can be easily exhibited at a pinpoint. In addition, when heavy calcium carbonate is used, since the heavy calcium carbonate is amorphous, even when fibers of various sizes exist in a slurry, there is an advantage that it is possible to suppress aggregation of cellulose fibers by enter of the heavy calcium carbonate into a gap in a process in which the fibers are aggregated at the time of removing an aqueous medium.

A blending amount of the inorganic powder that does not interact is preferably 1 to 9900% by mass, more preferably 5 to 1900% by mass, and particularly preferably 10 to 900% by mass with respect to the fibrous cellulose. When the blending amount is less than 1% by mass, there is a possibility that an action of entering a gap between cellulose fibers to suppress aggregation is insufficient. Meanwhile, when the blending amount is more than 9900% by mass, there is a possibility that a function as cellulose fibers cannot be exhibited.

By the way, when the maleic anhydride-modified resin and the inorganic powder that does not interact are used in combination, the maleic anhydride-modified resin and the inorganic powder that does not interact exhibit an effect of preventing aggregations thereof each other even when the maleic anhydride-modified resin and the inorganic powder are mixed under a condition where the maleic anhydride-modified resin and the inorganic powder are each aggregated. In addition, a powder having a small particle size has a large surface area and is more easily affected by intermolecular force than an influence of gravity, and as a result, the powder is easily aggregated. Therefore, the powder is not well loosened in a microfiber cellulose slurry when the powder and the slurry are mixed, or particles of the powder are aggregated when an aqueous medium is removed, whereby there is a possibility that the effect of preventing aggregation of the microfiber cellulose is not sufficiently exhibited. However, it is considered that when the maleic anhydride-modified resin and the inorganic powder that does not interact are used in combination, aggregation of the maleic anhydride-modified resin itself and aggregation of the inorganic powder itself can be alleviated.

When the maleic anhydride-modified resin and the inorganic powder that does not interact are used in combination, a ratio of the average particle size of the maleic anhydride-modified resin : the average particle size of the inorganic powder that does not interact is preferably 1 : 0.1 to 1 : 10,000, and more preferably 1 : 1 to 1 : 1000. Within this range, it is considered that the problem caused by the strength of aggregation force of the maleic anhydride-modified resin itself and the strength of aggregation force of the inorganic powder itself (for example, the powder is not well loosened in a slurry, or particles of the powder are aggregated when an aqueous medium is removed.) does not occur, and the effect of preventing aggregation of the microfiber cellulose can be sufficiently exhibited.

When the maleic anhydride-modified resin and the inorganic powder that does not interact are used in combination, a ratio of % by mass of the maleic anhydride-modified resin : % by mass of the inorganic powder is preferably 1 : 0.01 to 1 : 100, and more preferably 1 : 0.1 to 1 : 10. Within this range, it is considered that the different kinds of powders can inhibit aggregations of the powders themselves. That is, within this range, it is considered that the problem caused by the strength of aggregation force of the maleic anhydride-modified resin itself and the strength of aggregation force of the inorganic powder itself (for example, the powder is not well loosened in a slurry, or particles of the powder are aggregated when an aqueous medium is removed.) does not occur, and the effect of preventing aggregation of the microfiber cellulose can be sufficiently exhibited.

### (Dispersant)

The fibrous cellulose composite resin of the present embodiment is more preferable when being mixed with a dispersant. As the dispersant, aromatic compounds each having an amine group and/or a hydroxy group and aliphatic compounds each having an amine group and/or a hydroxy group are preferable.

Examples of the aromatic compounds each having an amine group and/or a hydroxy group include anilines, toluidines, trimethylanilines, anisidines, tyramines, histamines, tryptamines, phenols, dibutylhydroxytoluenes, bisphenol A-type compounds, cresols, eugenols, gallic acids, guaiacols, picric acids, phenolphthaleins, serotonins, dopamines, adrenalines, noradrenalines, thymols, tyrosines, salicylic acids, methyl salicylates, anisyl alcohols, salicyl alcohols, sinapyl alcohols, difenidols, diphenylmethanols, cinnamyl alcohols, scopolamines, triptophols, vanillyl alcohols, 3-phenyl-1-propanols, phenethyl alcohols, phenoxyethanols, veratryl alcohols, benzyl alcohols, benzoins, mandelic acids, mandelonitriles, benzoic acids, phthalic acids, isophthalic acids, terephthalic acids, mellitic acids, and cinnamic acids.

Examples of the aliphatic group compounds each having an amine group and/or a hydroxy group include caprylic alcohols, 2-ethylhexanols, pelargonic alcohols, capric alcohols, undecyl alcohols, lauryl alcohols, tridecyl alcohols, myristyl alcohols, pentadecyl alcohols, cetanols, stearyl alcohols, elaidyl alcohols, oleyl alcohols, linoleyl alcohols, methylamines, dimethylamines, trimethylamines, ethylamines, diethylamines, ethylenediamines, triethanolamines, N,N-diisopropylethylamines, tetramethylethylenediamines, hexamethylenediamines, spermidines, spermines, amantadines, formic acids, acetic acids, propionic acids, butyric acids, valeric acids, caproic acids, enanthic acids, caprylic acids, pelargonic acids, capric acids, lauric acids, myristic acids, palmitic acids, margaric acids, stearic acids, oleic acids, linolic acids, linoleic acids, arachidonic acids, eicosapentaenoic acids, docosahexaenoic acids, and sorbic acids.

The dispersant described above inhibits hydrogen bonding between cellulose fibers. Therefore, the microfiber cellulose is reliably dispersed in a resin during kneading. In addition, the dispersant described above also has a role of improving compatibility between the microfiber cellulose and the resin. In this regard, dispersibility of the microfiber cellulose in the resin is improved.

A mixing amount of the dispersant is preferably 0.1 to 1,000 parts by mass, more preferably 1 to 500 parts by mass, and particularly preferably 10 to 200 parts by mass with respect to 100 parts by mass of the microfiber cellulose. When the mixing amount of the dispersant is less than 0.1 parts by mass, improvement of the strength of the resin may be insufficient. Meanwhile, when the mixing amount is more than 1,000 parts by mass, the dispersant is excessively added, and the strength of the resin tends to be lowered.

In this regard, the maleic anhydride-modified resin described above is intended to improve compatibility by bonding between an acid group and a carbamate group of the microfiber cellulose, thereby enhancing a reinforcing effect. It is considered that since the maleic anhydride-modified resin has a large molecular weight, the maleic anhydride-modified resin is easily compatible with an additional resin, and contributes to improvement in strength. Meanwhile, the dispersant is interposed between hydroxy groups of molecules of the microfiber cellulose to prevent aggregation, thereby improving dispersibility in the resin. In addition, since the dispersant has a molecular weight smaller than that of the maleic anhydride-modified resin, the dispersant can enter a narrow space between fibers of the microfiber cellulose which the maleic anhydride-modified resin cannot enter, and the dispersant plays a role of improving dispersibility and improving strength. The molecular weight of the maleic anhydride-modified resin is 2 to 2,000 times, and preferably 5 to 1,000 times the molecular weight of the dispersant from the above viewpoint.

This point will be described more specifically. The inorganic powder that does not interact is physically interposed between molecules of the microfiber cellulose to inhibit hydrogen bonding, thereby improving dispersibility of the microfiber cellulose. On the other hand, an acid group of the maleic anhydride-modified resin and a carbamate group of the microfiber cellulose are bonded to each other to improve compatibility, thereby increasing a reinforcing effect. In this regard, the point that the dispersant inhibits hydrogen bonding between molecules of the microfiber cellulose is the same, but since the inorganic powder that does not interact is on a micrometer order, the inorganic powder is physically interposed to suppress hydrogen bonding. In addition, since the inorganic powder itself is rigid, the inorganic powder contributes to improvement of physical properties of a resin or the like when forming a composite with the resin or the like. Meanwhile, since the dispersant is at a molecular level and is extremely small, the dispersant is highly effective in inhibiting hydrogen bonding so as to cover the microfiber cellulose to improve the dispersibility of the microfiber cellulose. However, there is a possibility that the dispersant remains in the resin and deteriorates physical properties.

### (Method for manufacturing composite resin)

The carbamated microfiber cellulose and the carbamated pulp (or an aqueous dispersion of these fibrous celluloses) are mixed with the maleic anhydride-modified resin and the polyethylene as necessary. This mixture (liquid) is preferably dried into a dried product before being kneaded to form a composite resin. When the mixture is dried, it is not necessary to dry the fibrous cellulose at the time of kneading, and thermal efficiency is good.

For drying the mixture, for example, one or more kinds selected from the group consisting of rotary kiln drying, disk drying, air flow drying, medium fluidized drying, spray drying, drum drying, screw conveyor drying, paddle drying, single-screw kneading drying, multi-screw kneading drying, vacuum drying, and stirring drying can be used.

The mixture is more preferably dehydrated into a dehydrated product before being dried. For the dehydration, for example, one or more kinds selected from dehydration apparatuses such as a belt press, a screw press, a filter press, a twin roll, a twin wire former, a valveless filter, a center disk filter, a film treatment, and a centrifuge can be used.

Furthermore, the dried mixture (dried product) is preferably pulverized into a powdered product. The dried product can be pulverized, for example, using one or more kinds selected from the group consisting of a bead mill, a kneader, a disperser, a twist mill, a cut mill, and a hammer mill.

The powdered product has an average particle size of preferably 1 to 10,000 µm, more preferably 10 to 5,000 µm, particularly preferably 100 to 1,000 µm. When the average particle size of the powdered product is more than 10,000 µm, kneadability may be poor. Meanwhile, large energy is required to make the average particle size of the powdered product less than 1 µm, which is not economical.

The average particle size of the powdered product can be controlled not only by controlling the degree of pulverization but also by classification using a classification apparatus such as a filter or a cyclone.

The mixture (powdered product) has a bulk specific gravity of preferably 0.03 to 1.0, more preferably 0.04 to 0.9, particularly preferably 0.05 to 0.8. The bulk specific gravity exceeding 1.0 means that hydrogen bonding between molecules of the fibrous cellulose is stronger, and it is not easy to disperse the fibrous cellulose in the resin. Meanwhile, a bulk specific gravity of less than 0.03 is disadvantageous in terms of transportation cost.

The bulk specific gravity is a value measured in accordance with JIS K7365.

The mixture (powdered product) has a moisture percentage of preferably 50% or less, more preferably 30% or less, particularly preferably 10% or less. When the moisture percentage is more than 50%, energy for kneading with the resin is enormous, which is not economical.

The moisture percentage is a value calculated by the following formula, in which the mass at the time when a sample is held at 105°C for six hours or more using a constant temperature dryer and no change in mass is observed is taken as the mass after drying. Fiber moisture percentage (%) = [(mass before drying - mass after drying)/mass before drying] x 100

The dried ground product is kneaded into a fibrous cellulose composite resin. According to the composite resin in which the maleic anhydride-modified polypropylene and the polyethylene are used in combination, even when a blending ratio of the fibrous cellulose is as high as, for example, 50% by mass or more, the composite resin has excellent processing suitability, and can form a strand.

Note that a blending ratio of the fibrous cellulose with respect to the total amount of the composite resin is, for example, 50% by mass or more, preferably 50 to 70% by mass, and more preferably 55 to 68% by mass. When the blending ratio exceeds 70% by mass, there is a possibility that the processing suitability of the composite resin is insufficient also according to the present embodiment.

The dried powdered product can be kneaded by, for example, a similar method to that in a case of adding an additional resin and kneading the mixture described below. Therefore, description thereof is omitted here.

The fibrous cellulose composite resin of the present embodiment can be used after being kneaded with an additional resin and diluted until a blending ratio of the fibrous cellulose reaches, for example, 10%. This kneading can be performed, for example, by a method for mixing the composite resin of the present embodiment, which is a powdered product, and a pellet-like additional resin, or by a method for first melting an additional resin and adding the composite resin of the present embodiment, which is a powdered product, into the melted product.

For the kneading treatment, for example, one or more kinds selected from the group consisting of a single-screw kneader, a multi-screw kneader having two or more screws, a mixing roll, a kneader, a roll mill, a Banbury mixer, a screw press, and a disperser can be used. Among these apparatuses, a multi-screw kneader having two or more screws is preferably used. Two or more multi-screw kneaders each having two or more screws may be used in parallel or in series.

A temperature of the kneading treatment is equal to or higher than the glass transition point of the resin and varies depending on the kind of resin, but is preferably 80 to 280°C, more preferably 90 to 260°C, and particularly preferably 100 to 240°C.

As the additional resin, at least one of a thermoplastic resin and a thermosetting resin can be used.

As the thermoplastic resin, for example, one or more kinds selected from the group consisting of a polyolefin resin such as polypropylene (PP) or polyethylene (PE), a polyester resin such as aliphatic polyester or aromatic polyester, a polyacrylic resin such as polystyrene, methacrylate, or acrylate, a polyamide resin, a polycarbonate resin, and a polyacetal resin can be used.

However, at least one of a polyolefin and a polyester resin is preferably used. As the polyolefin, polypropylene is preferably used. Furthermore, examples of the polyester resin include an aliphatic polyester resin such as polylactic acid or polycaprolactone, and an aromatic polyester resin such as polyethylene terephthalate. However, a biodegradable polyester resin (also referred to simply as "biodegradable resin") is preferably used.

As the biodegradable resin, for example, one or more kinds selected from the group consisting of a hydroxycarboxylic acid-based aliphatic polyester, a caprolactone-based aliphatic polyester, and a dibasic acid polyester can be used.

As the hydroxycarboxylic acid-based aliphatic polyester, for example, one or more kinds selected from the group consisting of a homopolymer of a hydroxycarboxylic acid such as lactic acid, malic acid, glucose acid, or 3-hydroxybutyric acid, and a copolymer using at least one of these hydroxycarboxylic acids can be used. However, polylactic acid, a copolymer of lactic acid and any of the above hydroxycarboxylic acids other than lactic acid, polycaprolactone, and a copolymer of at least one of the above hydroxycarboxylic acids and caprolactone are preferably used, and polylactic acid is particularly preferably used.

As this lactic acid, for example, L-lactic acid, D-lactic acid, and the like can be used, and these lactic acids may be used singly or in combination of two or more kinds thereof.

As the caprolactone-based aliphatic polyester, for example, one or more kinds selected from the group consisting of a homopolymer of polycaprolactone and a copolymer of polycaprolactone or the like and the above hydroxycarboxylic acid can be used.

As the dibasic acid polyester, for example, one or more kinds selected from the group consisting of polybutylene succinate, polyethylene succinate, and polybutylene adipate can be used.

The biodegradable resin may be used singly or in combination of two or more kinds thereof.

Examples of the thermosetting resin include a phenol resin, a urea resin, a melamine resin, a furan resin, an unsaturated polyester, a diallyl phthalate resin, a vinyl ester resin, an epoxy resin, a polyurethane-based resin, a silicone resin, and a thermosetting polyimide-based resin. These resins can be used singly or in combination of two or more kinds thereof.

As for blending ratios of the fibrous cellulose and the total amount of the resins, preferably, the blending ratio of the fibrous cellulose is 1 part by mass or more and the blending ratio of the resins is 99 parts by mass or less, more preferably, the blending ratio of the fibrous cellulose is 2 parts by mass or more and the blending ratio of the resins is 98 parts by mass or less, and particularly preferably, the blending ratio of the fibrous cellulose is 3 parts by mass or more and the blending ratio of the resins is 97 parts by mass or less. Preferably, the blending ratio of the fibrous cellulose is 50 parts by mass or less and the blending ratio of the resins is 50 parts by mass or mores, more preferably, the blending ratio of the fibrous cellulose is 40 parts by mass or less and the blending ratio of the resins is 60 parts by mass or more, and particularly preferably, the blending ratio of the fibrous cellulose is 30 parts by mass or less and the blending ratio of the resins is 70 parts by mass or more. In particular, when the blending ratio of the fibrous cellulose is 10 to 50 parts by mass, strength of the resin composition, particularly bending strength thereof and tensile elastic modulus strength thereof can be significantly improved.

Note that the content ratios of the fibrous cellulose and the resins contained in the finally obtained resin composition are usually the same as the above blending ratios of the fibrous cellulose and the resins.

### (Others)

The fibrous cellulose composite resin or a composite resin obtained by diluting the composite resin is, for example, kneaded again if necessary, and then can be molded into a desired shape. The size, thickness, shape, and the like of the molding are not particularly limited, and can be, for example, a sheet-like shape, a pellet-like shape, a powder-like shape, or a fibrous shape.

A temperature during the molding treatment is equal to or higher than the glass transition point of the resin, and varies depending on the kind of the resin, but is, for example, 90 to 260°C, and preferably 100 to 240°C.

The kneaded product can be molded by, for example, mold molding, injection molding, extrusion molding, hollow molding, or foam molding. The kneaded product can be spun into a fibrous shape and mixed with the above-described plant material or the like to be formed into a mat shape or a board shape. Mixing can be performed by, for example, a method for simultaneously depositing the kneaded product and the plant material or the like by air-lay.

As an apparatus for molding the kneaded product, for example, one or more kinds selected from the group consisting of an injection molding machine, a flowing molding machine, a hollow molding machine, a blow molding machine, a compression molding machine, an extrusion molding machine, a vacuum molding machine, and a pressure molding machine can be used.

The above molding can be performed following kneading, or can be performed by once cooling the kneaded product, forming the kneaded product into chips using a crusher or the like, and then putting the chips into a molding machine such as an extrusion molding machine or an injection molding machine. Of course, molding is not an essential requirement of the present invention.

### Examples

Next, Examples of the present invention will be described.

### (Test Example 1)

A urea aqueous solution having a solid concentration of 30% was mixed with a softwood bleached kraft pulp having a moisture content of 50% or less such that a mass ratio of pulp : urea was 100 : 50 in terms of a solid content, and then the mixture was dried at 105°C. Thereafter, the mixture was allowed to stand at 160°C for one hour for reaction to obtain a carbamate-modified pulp (CA pulp).

The resulting carbamate-modified pulp was diluted with distilled water and stirred, and dehydrated and washed twice to adjust a solid concentration thereof to 3.0% by mass, thereby obtaining a washed carbamate-modified pulp.

The washed carbamate-modified pulp was beaten using a beating machine until a fine ratio (a ratio of fibers each having a fiber length of 0.2 mm or less in fiber length distribution measurement by FS5) reached 40% or more to obtain a carbamate-modified microfiber cellulose (CAMFC).

To 916 g of the carbamate-modified microfiber cellulose having a solid concentration of 3.0% by mass, 20.7 g of maleic anhydride-modified polypropylene and 6.8 g of polypropylene powder were added, and the mixture was stirred and then heated and dried using a contact dryer heated to 140°C to obtain a fibrous cellulose-containing substance. The fibrous cellulose-containing substance had a moisture content of 5 to 22%.

The fibrous cellulose-containing substance was kneaded with a biaxial kneader under conditions of 170°C and 75 rpm, and cut into a cylindrical shape having a diameter of 2 mm and a length of 2 mm to obtain a fibrous cellulose composite resin having a fiber blending ratio of 66.7%.

The fibrous cellulose composite resin having a fiber blending ratio of 66.7% and PP pellets were dry-blended at a dry mass ratio of 9 : 51, kneaded with a twin-screw kneader under conditions of 170°C and 75 rpm, and cut into a cylindrical shape having a diameter of 2 mm and a length of 2 mm with a pelleter to obtain a fibrous cellulose composite resin having a fiber blending ratio of 10%. This fibrous cellulose composite resin having a fiber blending ratio of 10% was injection-molded into a rectangular parallelepiped test piece (length 59 mm, width 9.6 mm, thickness 3.8 mm) at 180°C.

### (Other Test Examples)

Other tests were performed on the fibrous cellulose by changing a part or whole of the carbamated microfiber cellulose to a carbamated pulp, changing the fine ratio of the fibrous cellulose, and the like. Details are presented in Table 1.

For each of the obtained test pieces, a contaminant area ratio (mm²/m²), dispersibility (o is described when there are less than two aggregates that can be visually confirmed, Δ is described when there are two or more aggregates that can be visually confirmed, and × is described when there are two or more aggregates having a major axis of 1 mm or more.), flexural modulus (a relative value when flexural modulus of the base PP is 100), bending strength (a relative value when bending strength of the base PP is 100), and an MFR (200°C, 10 kgf) are presented in Table 1. Note that the contaminant area ratio was measured conforming to JIS P 8145:2011. In the bending test, examination was performed conforming to JIS K7171: 2008. Note that the adjustment fine ratio means a fine ratio of fibers obtained by mixing the carbamated microfiber cellulose and the carbamated pulp.

**[Table 1]**

| Test Example | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Pulp (%) | - | - | - | - | - | - | - | - | - | - | - | - | 25 | - |
| CA pulp (%) | 0 | 25 | 50 | 75 | 25 | 50 | 25 | 50 | 100 | 0 | 0 | 0 | - | - |
| CA pulp average fiber length (mm) | - | 1.95 | 1.95 | 1.95 | 1.95 | 1.95 | 1.95 | 1.95 | 1.95 | - | - | - | - | - |
| CAMFC (%) | 100 | 75 | 50 | 25 | 75 | 50 | 75 | 50 | 0 | 100 | 100 | 100 | 75 | 100 |
| CAMFC average fiber length (mm) | 0.56 | 0.45 | 0.45 | 0.45 | 0.36 | 0.36 | 0.18 | 0.18 | - | 0.76 | 0.65 | 0.60 | 0.45 | 0.38 |
| Fine ratio of pulp (%) | | | | | | | | | | | | | 15 | |
| Fine ratio of CA pulp (%) | - | 15 | 15 | 15 | 15 | 15 | 15 | 15 | 15 | - | - | - | - | - |
| Fine ratio of CAMFC (%) | 40 | 54 | 54 | 54 | 64 | 64 | 80 | 80 | - | 28 | 34 | 37 | 54 | 60 |
| Adjustment fine ratio (%) | 40 | 44 | 34 | 25 | 51 | 39 | 64 | 48 | 15 | 28 | 34 | 37 | 44 | 64 |
| Contaminant area ratio (mm²/m²) | 12 | 6 | 5 | 4 | 70 | 50 | 377 | 347 | 0 | 13 | 50 | 21 | 67 | 12 |
| Dispersibility (visually evaluated) | △ | ○ | ○ | ○ | △ | △ | × | × | ○ | △ | △ | △ | △ | △ |
| Flexural modulus to base PP () | 160 | 160 | 160 | 147 | 164 | 154 | 140 | 140 | 133 | 160 | 160 | 160 | 133 | 146 |
| Bending strength to base PP (-) | 131 | 129 | 129 | 125 | 133 | 127 | 120 | 122 | 117 | 134 | 132 | 131 | 118 | 125 |
| MFR (200°C 10 kgl) | 1.6 | 2.1 | 2.1 | 2.2 | 2.2 | 2.1 | 2.5 | 2.6 | 1.8 | 1.6 | 1.7 | 1.7 | 2.2 | 2.0 |

### (Discussion)

It can be found that the carbamated microfiber cellulose) improves dispersibility by being mixed with the carbamated pulp. It can also be found that the degree of improvement varies depending on the fine ratio of the carbamated microfiber cellulose. Furthermore, it can also be found that bendability is insufficient only with the pulp, and the carbamated microfiber cellulose is required. This is considered to be because the microfiber cellulose is beaten to be fibrillated, thereby increasing a contact point with the resin, and improving bendability when being added to the composite resin.

### Industrial Applicability

The present invention can be used as a fibrous cellulose composite resin.

## Claims

1. A fibrous cellulose composite resin comprising:
a fibrous cellulose; and a resin,
wherein the resin comprises a carbamated microfiber cellulose having an average fiber length of 0.15 to 0.90 mm and having a part or all of hydroxy groups replaced with carbamate groups, and a carbamated pulp having an average fiber length of 1.0 to 5.0 mm and having a part or all of hydroxy groups replaced with carbamate groups, and
wherein the carbamated microfiber cellulose has a fine ratio of 70% or less.

2. The fibrous cellulose composite resin according to claim 1,
wherein a ratio of a carbamate group introduction amount between the carbamated microfiber cellulose and the carbamated pulp is 0.3 to 4.0.

3. The fibrous cellulose composite resin according to claim 1,
wherein a ratio of an average fiber diameter between the carbamated microfiber cellulose and the carbamated pulp is 1.1 to 50.0.

4. The fibrous cellulose composite resin according to claim 1,
wherein a ratio of the average fiber length between the carbamated microfiber cellulose and the carbamated pulp is 1.1 to 20.0.

5. The fibrous cellulose composite resin according to claim 1,
wherein a ratio of a dry mass between the carbamated microfiber cellulose and the carbamated pulp is 0.01 to 100.

6. The fibrous cellulose composite resin according to claim 1, comprising
a maleic anhydride-modified resin as the resin,
wherein a blending ratio of the fibrous cellulose is 50% by mass or more.
